(19) **Europäisches Patentamt** / **European Patent Office** / **Office européen des brevets**

(11) **EP 4 737 714 A1**

(12) **EUROPEAN PATENT APPLICATION**
published in accordance with Art. 153(4) EPC

(43) Date of publication:
06.05.2026 Bulletin 2026/19

(21) Application number: 23943444.2

(22) Date of filing: 20.12.2023

(51) International Patent Classification (IPC):
*F03D 13/25* (2016.01)    *F03D 13/20* (2016.01)
*F03D 80/00* (2016.01)

(52) Cooperative Patent Classification (CPC):
Y02E 10/72; Y02E 10/727

(86) International application number:
PCT/CN2023/140355

(87) International publication number:
WO 2025/000971 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2023 CN 202310816298

(71) Applicants:
• GOLDWIND SCIENCE & TECHNOLOGY CO., LTD.
Xinjiang 830026 (CN)
• Beijing Goldwind Science & Creation
Windpower Equipment Co. Ltd.
Beijing 100176 (CN)

(72) Inventors:
• ZHAI, Endi
Beijing 100176 (CN)
• GAO, Yang
Beijing 100176 (CN)
• DU, Xin
Beijing 100176 (CN)
• SONG, Baohua
Beijing 100176 (CN)

(74) Representative: Hoffmann Eitle
Patent- und Rechtsanwälte PartmbB
Arabellastraße 30
81925 München (DE)

(54) **FLOATING WIND TURBINE FLOATING BODY, WIND TURBINE GENERATOR SYSTEM AND CONTROL METHOD**

(57) The present application relates to a floating-type wind turbine floating body, a wind turbine generator system and a control method. The floating-type wind turbine floating body includes: a main column, configured to support a tower; a plurality of first connecting bodies, wherein the plurality of first connecting bodies are arranged at intervals in a circumferential direction of the main column and are connected to the main column respectively; a plurality of auxiliary columns, wherein the plurality of auxiliary columns are distributed at intervals in the circumferential direction, and one end of each of the first connecting bodies facing away from the main column is connected to a corresponding auxiliary column of the auxiliary columns; wherein each of the auxiliary columns has a first static chamber and a first dynamic chamber that are independently arranged, a first medium is enclosed within the first static chamber, each of the auxiliary columns is provided with a first opening connected to the first dynamic chamber and a first control valve, and the first control valve controls opening and closing of the first opening to adjust a volume of the seawater entering the first dynamic chamber. According to the floating-type wind turbine floating body, wind turbine generator system and control method provided in the embodiments of the present application, the floating-type wind turbine floating body has a fast response speed and a good stability effect.

210

210

Z

220

240

230

210

**Fig. 3**

# EP 4 737 714 A1

## Description

### CROSS-REFERENCE TO RELATED APPLICATIONS

This application claims priority to Chinese Patent Application No. 202310816298.2 filed on June 29, 2023, which is hereby incorporated by reference in its entirety.

### TECHNICAL FIELD

The present application relates to the technical field of wind power, and in particular to a floating-type wind turbine floating body, a wind turbine generator system and a control method.

### BACKGROUND

The wind power industry continues to contribute to the achievement of dual-carbon goals. Currently, wind turbine generator systems are developing toward larger single-unit capacity, lighter overall weight, intelligentization, and offshore applications. According to statistics, the cumulative installed capacity of offshore wind power is increasing year by year. With the large-scale development of nearshore resources, the development and utilization of deep-sea resources have attracted significant attention. Within this industry scenario, floating-type wind turbine generator systems are gradually being developed and will become a major contributor to the subsequent development of offshore wind power.

A wind turbine floating body is used to support components, such as a tower, a nacelle etc., of a floating-type wind turbine generator system. When the wind turbine generator system faces wind loads, wave loads, ocean current loads, ice loads, etc., from the perspective of overall dynamics, the wind turbine floating body has six degrees of freedom in all directions, due to the "floating" characteristics of the floating-type wind turbine generator system. Under intertwined coupling of external load randomness and the complexity of the wind turbine generator system's own motion, the overall non-linear characteristics of the floating-type wind turbine generator system become more complex. The motion stability of the floating-type wind turbine generator system is one of the most important indicators to ensure continuous, stable, safe and efficient output of the wind turbine generator system and to ensure power generation. Therefore, how to ensure the stability of the floating-type wind turbine generator system is one of the problems that need to be urgently solved in the wind power field.

The wind turbine floating body in related art mainly adjusts an overall inclination angle of the wind turbine floating body by controlling mutual flow of fluids between different floating bodies, so as to ensure the stability of the floating-type wind turbine generator system where the wind turbine floating body is located. However, this design method makes an overall displacement of the wind turbine floating body unchanged, resulting in slow response speed and poor stability effect.

### SUMMARY

Embodiments of the present application provide a floating-type wind turbine floating body, a wind turbine generator system and a control method. The floating-type wind turbine floating body has a fast response speed and a good stability effect.

In one aspect, embodiments of the present application provide a floating-type wind turbine floating body, capable of being arranged in seawater and configured to support a tower, wherein the floating-type wind turbine floating body includes: a main column, configured to support the tower; a plurality of first connecting bodies, wherein the plurality of first connecting bodies are arranged at intervals in a circumferential direction of the main column and are connected to the main column respectively; a plurality of auxiliary columns, wherein the plurality of auxiliary columns are distributed at intervals in the circumferential direction, and one end of each of the first connecting bodies facing away from the main column is connected to a corresponding auxiliary column of the auxiliary columns; wherein each of the auxiliary columns has a first static chamber and a first dynamic chamber that are independently arranged, a first medium is enclosed within the first static chamber, each of the auxiliary columns is provided with a first opening connected to the first dynamic chamber and a first control valve, and the first control valve controls opening and closing of the first opening to adjust a volume of the seawater entering the first dynamic chamber.

In another aspect, embodiments of the present application provide a wind turbine generator system, including: the floating-type wind turbine floating body described above; a wind turbine main body arranged on the main column, wherein the wind turbine main body includes the tower connected to the main column, a nacelle arranged on the tower, and an impeller arranged on the nacelle.

In yet another aspect, embodiments of the present application provide a control method for the wind turbine generator system described above, including: acquiring current power information of the wind turbine generator system;

acquiring, under a condition that the current power information continuously exceeds a first threshold for a preset time period, inclination angle information of the floating-type wind turbine floating body; determining, under a condition that the inclination angle information exceeds a preset range, a target auxiliary column that needs to be adjusted based on the inclination angle information, a direction of incoming wind, and target posture information corresponding to a target posture to be adjusted to; and adjusting a volume of seawater within the target auxiliary column until the floating-type wind turbine floating body reaches the target posture.

According to the floating-type wind turbine floating body, wind turbine generator system, and control method provided in the embodiments of the present application, the floating-type wind turbine floating body includes a main column, a plurality of auxiliary columns, and a plurality of first connecting bodies. The main column is configured to support the tower, and the plurality of auxiliary columns are arranged at intervals in a circumferential direction of the main column, and are connected to the main column via the first connecting bodies respectively. This ensures the integrity of the floating-type wind turbine floating body. Each of the auxiliary columns has a first static chamber and a first dynamic chamber that are independently arranged, a first medium is enclosed within the first static chamber, and each of the auxiliary columns is provided with a first opening connected to the first dynamic chamber and a first control valve. Under a condition that it is necessary to adjust a displacement of any auxiliary column among the plurality of auxiliary columns, the first opening can be directly controlled to be open through the first control valve to adjust a volume of seawater in the first dynamic chamber of the auxiliary column. This can quickly change a weight of a single auxiliary column and a displacement of the entire floating-type wind turbine floating body, so as to quickly respond to influences of wind loads, wave loads, ocean current loads, ice loads, etc. On the basis of ensuring the overall stability of the floating-type wind turbine floating body and the wind turbine generator system where the floating-type wind turbine floating body is located, this ensures that the overall response speed of the floating-type wind turbine floating body is fast, and a change of the displacement of the floating-type wind turbine floating body can adapt to the influences of different external factors, resulting in a good stability effect.

**BRIEF DESCRIPTION OF THE DRAWINGS**

The features, advantages and technical effects of exemplary embodiments of the present application will be described below with reference to the accompanying drawings.

Fig. 1 is a schematic structural diagram of a wind turbine generator system according to an embodiment of the present application;
Fig. 2 is a schematic diagram of degrees of freedom of motion of a wind turbine floating body according to an embodiment of the present application;
Fig. 3 is a schematic structural diagram of a wind turbine floating body according to an embodiment of the present application;
Fig. 4 is a schematic structural diagram of an auxiliary column according to an embodiment of the present application;
Fig. 5 is a cross-sectional view taken along the A-A direction in Fig. 4;
Fig. 6 is a schematic structural diagram of an auxiliary column according to another embodiment of the present application;
Fig. 7 is a cross-sectional view taken along the B-B direction in Fig. 6;
Fig. 8 is a hydraulic diagram of a floating-type wind turbine floating body according to an embodiment of the present application ;
Fig. 9 is a flow chart of a control method according to an embodiment of the present application;
Fig. 10 is a control logic diagram of a control method according to an embodiment of the present application;
Figs. 11 to 14 are schematic diagrams of different incoming wind directions according to an embodiment of the present application.

In the drawings:

100-Wind turbine body; 10-Tower; 20-Nacelle; 30-Generator; 40-Impeller; 41-Hub; 42-Blade; 50-Mooring system; 60-Seabed;
200-Floating-type wind turbine floating body;
210-Auxiliary column; 210a-First auxiliary column; 210b-Second auxiliary column; 210c-Third auxiliary column;
211-First static chamber; 212-First medium; 213-First dynamic chamber; 214-First opening; 215-First control valve;
216-Gas pipe; 217-Compressor; 218-Second control valve; 219-Seawater;
220-Main column;
221-Flow meter; 222-Pressure gauge; 223-Filter;
230-First connecting body;
240-Second connecting body;

W-Radial direction; Z-Circumferential direction.

## DETAILED DESCRIPTION

The features and exemplary embodiments of various aspects of the present application will be described in detail below. In the detailed description below, many specific details are set forth in order to provide a comprehensive understanding of the present application. However, it will be apparent to those skilled in the art that the present application can be implemented without some of these specific details. The following description of the embodiments is merely intended to provide a better understanding of the present application by illustrating examples of the present application. In the accompanying drawings and the following description, at least some of the well-known structures and technologies are not shown in order to avoid unnecessary ambiguity in the present application. Furthermore, for clarity, sizes of some structures may be exaggerated. In addition, the features, structures, or characteristics described below may be combined in any suitable manner in one or more embodiments.

Directional terms used in the following description refer to directions shown in the figures and are not intended to limit specific structures of the floating-type wind turbine floating body, wind turbine generator system, and control method of the present application. It should also be noted that, unless otherwise specified or limited, the terms "installation" and "connection" should be interpreted broadly, meaning, for example, a fixed connection, a detachable connection, or an integrated connection; a direct connection or an indirect connection. Those skilled in the art will understand specific meanings of these terms in the present application based on specific circumstances.

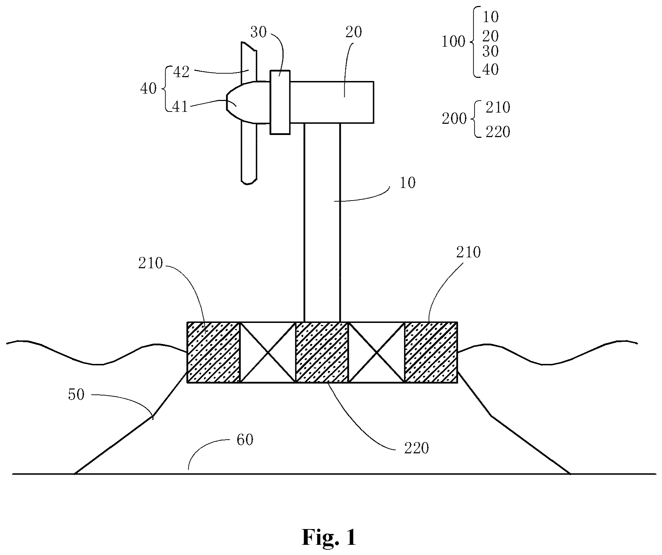

As shown in Fig. 1, the embodiments of the present application provide a wind turbine generator system, which includes a floating-type wind turbine floating body 200 and a wind turbine body 100. The wind turbine body 100 includes a tower 10, a nacelle 20, a generator 30, and an impeller 40. The tower 10 is connected to the floating-type wind turbine floating body, the nacelle 20 is arranged at the top of the tower 10, and the generator 30 is arranged at the nacelle 20. In some examples, the generator 30 may be located outside the nacelle 20, or in other examples, the generator 30 may also be located inside the nacelle 20. The impeller 40 includes a hub 41 and a plurality of blades 42 connected to the hub 41. The impeller 40 is connected to a rotor of the generator 30 via the hub 41, thereby driving the rotor to rotate relative to a stator, to achieve a power generation demand of the wind turbine generator system. The floating-type wind turbine floating body floats in the seawater, and in order to limit its range of motion, it is anchored to the seabed 60 via a mooring system 50, thereby constraining its range of motion.

Due to huge differences between the floating-type wind turbine generator system and an onshore wind turbine generator system or an offshore monopile-fixed wind turbine generator system, the floating-type wind turbine generator system has its own unique floating body and mooring system in terms of the overall system composition.

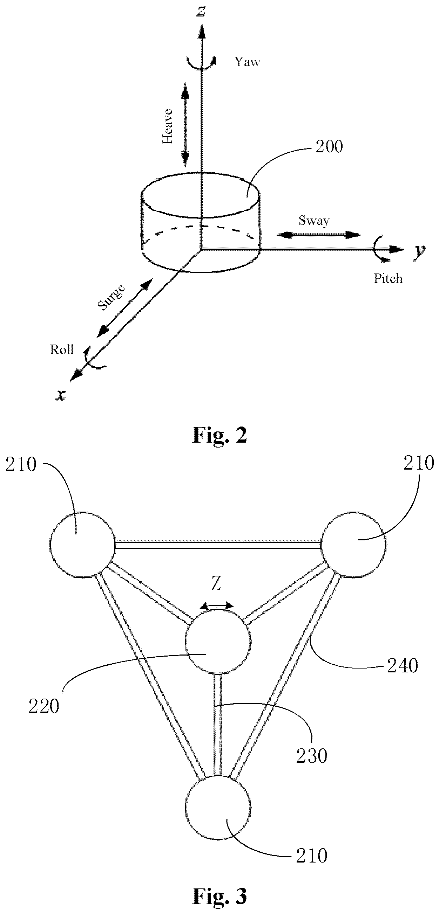

As shown in Fig. 2, from the perspective of external loads, the floating-type wind turbine floating body as a whole faces wind loads, wave loads, ocean current loads, ice loads, etc., and from the perspective of overall dynamics, the wind turbine floating body and the wind turbine generator system where the floating-type wind turbine floating body is located have six degrees of freedom in all directions, due to the "floating" characteristics of the floating-type wind turbine generator system. Three translational degrees of freedom include surge, sway, and heave, and three rotational degrees of freedom include roll, pitch, and yaw. Under the influence of external random loads input and coupling of multiple systems in the wind turbine generator system, motion characteristics and mechanisms of the floating-type wind turbine generator system become more complex.

Continuing to refer to Fig. 2, the motion stability of the floating-type wind turbine generator system is one of the most important indicators to ensure continuous, stable, safe, and efficient output of the wind turbine generator system and to ensure power generation. However, while the impeller 40 captures wind energy to generate rotational mechanical energy, it also synchronously generates a thrust in the same direction as the incoming wind. This force is transmitted to the wind turbine floating body 200, causing the wind turbine generator system to generate an elevation angle in the y direction of rotation in Fig. 2, resulting in an included angle between the impeller of the wind turbine generator system and the incoming wind direction. According to equation (1), the power generation P is proportional to A. The existence of the elevation angle will reduce A, thereby reducing the power generation of the wind turbine generator system.

$$P = \frac{1}{2}\rho AV^3 \qquad\qquad (1)$$

To improve the stability of the floating-type wind turbine generator system, a ballast control system for a floating wind turbine platform (i.e., a wind turbine floating body) has been proposed in related arts. This system consists of multiple stable columns with internal volumes for accommodating ballast (water) and a control system, and adjusts and controls the ballast among the multiple stable columns based on the incoming wind and a posture of the floating-type wind turbine generator system, thereby enabling the impeller of the wind turbine generator system to face the wind directly and reducing power generation losses. This allows for control of the posture of the floating-type wind turbine generator system, thereby optimizing the overall power generation.

However, during implementation and application, although this structural form of the wind turbine floating body can improve the stability of the floating-type wind turbine generator system to a certain extent, mutual linkage and adjustment of ballast water among the multiple stable columns with internal volumes for accommodating ballast (water) based on an incoming wind speed and the posture of the floating-type wind turbine generator system requires a large number of supporting hardware, such as pumps (several thousand cubic meters per hour), pipelines, and valves, etc. On one hand, it makes the structure complex, and on the other hand, it imposes high demands on system reliability and redundancy design. Once any component in the system fails, it will affect the performance and safety of the whole wind turbine. Furthermore, from another perspective, a speed of the ballast water adjustment among different stable columns achieved through pumps and pipelines is extremely slow, typically between half an hour and an hour. This response speed of the system determines that the wind turbine generator system cannot match the incoming wind and wave loads in an optimal posture in most scenarios.

As shown in Figs. 3 to 5, based on the above context, the embodiments of the present application provide the floating-type wind turbine floating body 200 that can be arranged in seawater 219 and configured to support the tower 10. The floating-type wind turbine floating body 200 includes a main column 220, a plurality of first connecting bodies 230, and a plurality of auxiliary columns 210. The main column 220 is configured to support the tower 10. The plurality of first connecting bodies 230 are arranged at intervals in a circumferential direction Z of the main column 220 and are connected to the main column 220 respectively. The plurality of auxiliary columns 210 are distributed at intervals in the circumferential direction Z, and one end of each of the first connecting bodies 230 facing away from the main column 220 is connected to one of the auxiliary columns 210. Each of the auxiliary columns 210 has a first static chamber 211 and a first dynamic chamber 213 that are independently arranged, and a first medium 212 is enclosed within the first static chamber 211. Each of the auxiliary columns 210 is provided with a first opening 214 connected to the first dynamic chamber 213 and a first control valve 215, and the first control valve 215 controls opening and closing of the first opening 214 to adjust a volume of the seawater 219 entering the first dynamic chamber 213.

There is one main column 220, and there are a plurality of auxiliary columns 210. The plurality of auxiliary columns 210 are arranged at intervals in the circumferential direction Z of the main column 220. The number of the auxiliary columns 210 may be three, four, five, or even more. Line connecting centers of the auxiliary columns 210 may form a triangle, a quadrilateral, a pentagon, or other shape, optionally a regular polygon. A center of the main column 220 may be located within a shape formed by the lines connecting centers of the auxiliary columns 210, or may optionally be located at a center position of the shape formed by the lines connecting centers of the auxiliary columns 210.

Each auxiliary column 210 may be cylindrical in shape as a whole. In a direction perpendicular to a sea level, or in an extension direction of the tower 10, a shape of an orthographic projection of each auxiliary column 210 may be a regular geometric shape.

Optionally, the shape of the orthographic projection of each auxiliary column 210 in the direction perpendicular to the sea level may be a circle, an ellipse, or a polygon. In the case of a polygon, it may optionally be a regular polygon. A shape and structure of the main column 220 may be the same as that of the auxiliary columns 210, or may be different from that of the auxiliary columns 210. The main column 220 may be provided with a static chamber and a dynamic chamber, or may not be provided with a static chamber and a dynamic chamber.

The sea level may be understood as a surface of the seawater 219 in a calm state without being affected by wind and waves.

Each first connecting body 230 may be in a structural form of a connecting rod, a connecting plate, etc. Each auxiliary column 210 is connected to the main column 220 via a corresponding one of the first connecting bodies 230. The connection between the first connecting bodies 230 and the main column 220 and the connection between the first connecting bodies 230 and the auxiliary columns 210 may be achieved using fasteners or may be of an integral structural form. Each first connecting body 230 may have an equal extension length.

The number of the first dynamic chambers 213 and the number of the first static chambers 211 included in each auxiliary column 210 may be set according to adjustment requirements. For example, the number of the first dynamic chambers 213 and the number of the first static chambers 211 included in each auxiliary column 210 may be equal, for example, both of them may be one, and of course, both of them may be two or more. In some embodiments, the number of the first dynamic chambers 213 and the number of the first static chambers 211 included in each auxiliary column 210 may also be different, and one of them may be larger than the other. For example, each auxiliary column 210 may include two first dynamic chambers 213 and one first static chamber 211, or may include two first static chambers 211 and one first dynamic chamber 213. Of course, the above is only an example and is not limited to the above quantity settings.

The first medium 212 within the first static chamber 211 may be in a solid state or a liquid state. The first medium 212 is enclosed in the first static chamber 211 and its weight in the first static chamber 211 remains unchanged.

The first dynamic chamber 213 may be connected to the seawater 219 in a sea area through the first opening 214, so that the external seawater 219 may enter the first dynamic chamber 213 through the first opening 214, and may also flow out of the first dynamic chamber 213 from the first opening 214. The first control valve 215 may control the opening and closing of the first opening 214.

The floating-type wind turbine floating body 200 provided in the embodiments includes the main column 220, the plurality of auxiliary columns 210, and the plurality of first connecting bodies 230. The main column 220 is configured to support the tower 10. The plurality of auxiliary columns 210 are arranged at intervals in the circumferential direction Z of the main column 220, and are connected to the main column 220 via the first connecting bodies 230 respectively. This ensures the integrity of the floating-type wind turbine floating body 200. Each of the auxiliary columns 210 has a first static chamber 211 and a first dynamic chamber 213 that are independently arranged, a first medium 212 is enclosed within the first static chamber 211, and each of the auxiliary columns 210 is provided with a first opening 214 connected to the first dynamic chamber 213 and a first control valve 215. Under a condition that it is necessary to adjust a displacement of any auxiliary column 210 among the plurality of auxiliary columns 210, the first opening 214 can be directly controlled to be open through the first control valve 215 to adjust a volume of seawater 219 in the first dynamic chamber 213 of the auxiliary column 210. This can quickly change a weight of a single auxiliary column 210 and a displacement of the entire floating-type wind turbine floating body 200, so as to quickly respond to influences of wind loads, wave loads, ocean current loads, ice loads, etc. On the basis of ensuring the overall stability of the floating-type wind turbine floating body 200 and the wind turbine generator system where the floating-type wind turbine floating body 200 is located, this ensures that the overall response speed of the floating-type wind turbine floating body 200 is fast, and a change of the displacement of the floating-type wind turbine floating body 200 can adapt to the influences of different external factors, resulting in a good stability effect.

Furthermore, in the floating-type wind turbine floating body 200 provided in the embodiments of the present application, the first static chamber 211 and the first dynamic chamber 213 are independently arranged, and each first dynamic chamber 213 is designed to be able to communicate with the seawater 219. This design allows for independent control of a single auxiliary column 210, and passive coordination of the plurality of auxiliary columns 210 allows for an overall posture adjustment of the floating-type wind turbine floating body 200. There is no need to set connecting pipes, connecting valves, etc. between adjacent auxiliary columns 210, making an overall structure of the floating-type wind turbine floating body 200 simple and low-cost. Furthermore, the performance and safety of the entire wind turbine generator system will not be affected by damage to any of its components. For example, when one of the auxiliary columns 210 fails for a short period of time, the safety of the entire wind turbine generator system can be ensured by independently adjusting the volume of seawater 219 in the first dynamic chambers 213 of other auxiliary columns 210.

In some optional embodiments, in the floating-type wind turbine floating body 200 provided in the embodiments of the present application, the plurality of auxiliary columns 210 are arranged at intervals and uniformly in the circumferential direction Z, and a second connecting body 240 is connected between every two adjacent auxiliary columns 210.

The plurality of auxiliary columns 210 are evenly arranged in the circumferential direction Z of the main column 220, and included angles between two adjacent auxiliary columns 210 are equal.

Each second connecting body 240 may be in a structural form of a connecting rod, a connecting plate, etc. In the circumferential direction Z, a second connecting body 240 is connected between every two adjacent auxiliary columns 210. The connection between the second connecting bodies 240 and the auxiliary columns 210 may be achieved using fasteners or may be of an integral structural form. Each second connecting body 240 may have an equal extension length.

The floating-type wind turbine floating body 200 provided in the embodiments of the present application can improve an overall strength of the floating-type wind turbine floating body 200, and enhance a load-bearing capacity of the floating-type wind turbine floating body 200 by providing the second connecting bodies 240.

In some optional embodiments, in the floating-type wind turbine floating body 200 provided in the embodiments of the present application, one of the first static chamber 211 and the first dynamic chamber 213 is arranged around the other.

The first static chamber 211 may be annular and arranged around the first dynamic chamber 213. Of course, the first dynamic chamber 213 may also be annular and arranged around the first static chamber 211. Both the first static chamber 211 and the first dynamic chamber 213 may be hollow annular. Of course, one may be hollow annular and the other may be hollow columnar.

The floating-type wind turbine floating body 200 provided in the embodiments of the present application is arranged to make one of the first dynamic chamber 213 and the first static chamber 211 surround the other. Therefore, when the volume of the seawater 219 in the first dynamic chamber 213 in each auxiliary column 210 is adjusted, a pressure from the seawater 219 is ensured to be uniform at various locations, thereby ensuring the response speed and stability requirements of the floating-type wind turbine floating body 200 during posture adjustment.

In some optional embodiments, in the floating-type wind turbine floating body 200 provided in the embodiments of the present application, one of the first dynamic chamber 213 and the first static chamber 211 is an annular chamber and the other is a columnar chamber, and the first dynamic chamber 213 and the first static chamber 211 are arranged coaxially with each other.

The first dynamic chamber 213 may be an annular chamber, and the first static chamber 211 may be a columnar chamber. Of course, the first dynamic chamber 213 may also be a columnar chamber, and the first static chamber 211 may be an annular chamber. For example, the first dynamic chamber 213 may be an annular chamber, and the first static chamber 211 may be a columnar chamber.

The floating-type wind turbine floating body 200 provided in the embodiments of the present application can fully utilize an internal cavity of each auxiliary column 210 by configuring one of the first dynamic chamber 213 and the first static chamber 211 as an annular chamber and the other as a cylindrical chamber, and arranging the two chambers coaxially. At the same time, it can effectively ensure that incoming seawater 219 quickly flows in the circumferential direction Z of each auxiliary column 210, effectively ensuring uniform pressure from the seawater 219 at various parts of each auxiliary column 210, and ensuring the response speed and stability requirements of the floating-type wind turbine floating body 200 during posture adjustment.

In some optional embodiments, in the floating-type wind turbine floating body 200 provided in the embodiments of the present application, each auxiliary column 210 is in a shape of a hollow column as a whole, and the first dynamic chamber 213 and the first static chamber 211 are arranged alternately in a radial direction W of each auxiliary column 210.

The first static chamber 211 may be located in a center area of each auxiliary column 210, and then the first dynamic chamber 213 may be arranged around the first static chamber 211. Of course, conversely, the first dynamic chamber 213 may be located in the center area of each auxiliary column 210, and then the first static chamber 211 may be arranged around the first dynamic chamber 213.

The floating-type wind turbine floating body 200 provided in the embodiments of the present application, through the above arrangement, can have two or more first dynamic chambers 213. On the basis of equally sized auxiliary columns 210, the cavity inside the auxiliary columns 210 can be divided more finely, and a volume of the seawater 219 in the first dynamic chamber 213 in a same auxiliary column 210 can be individually controlled, which can further improve the response speed of the floating-type wind turbine floating body 200 during posture adjustment.

In some optional embodiments, in the floating-type wind turbine floating body 200 provided in the embodiments of the present application, the alternating distribution of the first dynamic chamber 213 and the first static chamber 211 in the radial direction W is only an optional implementation.

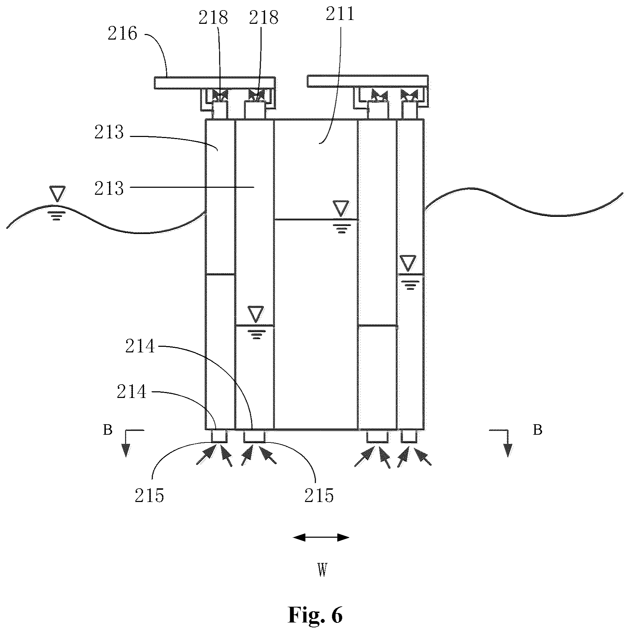

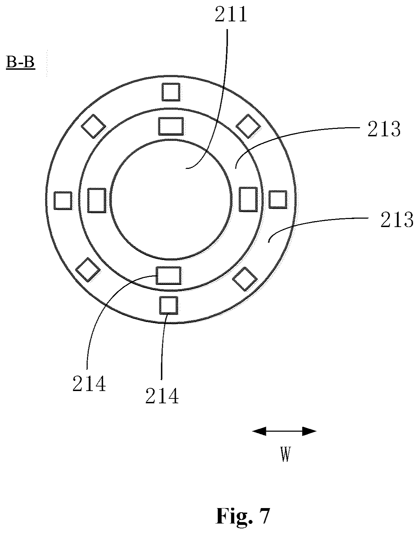

As shown in Figs. 6 and Figs. 7, in some embodiments, the number of the first dynamic chambers 213 may be two or more, and the two or more first dynamic chambers 213 are all arranged around the first static chamber 211 and are independently distributed from each other.

For example, the first static chamber 211 may be in a shape of a hollow column and located at the center of each auxiliary column 210, and the two or more first dynamic chambers 213 may be distributed in sequence along the radial direction W of each auxiliary column 210 and are independently arranged from each other. Each first dynamic chamber 213 is provided with a first opening 214 and a first control valve 215.

The floating-type wind turbine floating body 200 provided in the embodiments of the present application can increase a proportion of the first dynamic chambers 213 by configuring the number of the first dynamic chambers 213 to be two or more. Furthermore, the first dynamic chambers 213 are arranged independently from each other, which can also divide the cavity inside the auxiliary columns 210 more finely. The volume of the seawater 219 in each first dynamic chamber 213 in the same auxiliary column 210 can be individually controlled, which can further improve the response speed of the floating-type wind turbine floating body 200 during posture adjustment.

Furthermore, the two or more embodiments proposed in the present application correspond to a logic of dividing the whole into multiple parts through a holistic segmentation approach, thereby enhancing dynamic characteristics of the entire system. Furthermore, due to limited mass of the system used for posture adjustment, the first static chamber 211 is provided to ensure basic hydrodynamic characteristics of the system. At the same time, the arrangement of the first dynamic chamber 213 can maximize dynamic characteristics of a medium within the first dynamic chamber 213 through separation of the dynamic chamber and the static chamber, ensuring a corresponding speed of the floating-type wind turbine floating body 200 during posture adjustment.

In some optional embodiments, in the floating-type wind turbine floating body 200 provided in the embodiments of the present application, the first medium 212 includes at least one of a solid medium and a liquid medium.

The first medium 212 may include only a solid medium, or may include only a liquid medium. In some examples, it may include both a solid medium and a liquid medium.

The solid medium may include but is not limited to iron ore, stone, etc. The liquid medium may include but is not limited to the seawater 219, fresh water, etc.

The floating-type wind turbine floating body 200 provided in the embodiments of the present application can ensure support requirements of the floating-type wind turbine floating body 200 for components such as the tower 10 by configuring the first medium 212 to include one of a solid medium and a liquid medium. In addition, the above arrangement can also make a material selection range of the first medium 212 wide, and when a solid medium is used, it can also reduce corrosion protection requirements of the first static chamber 211.

In the floating-type wind turbine floating body 200 provided in the embodiments of the present application, after the first control valve 215 of each auxiliary column 210 is opened, each auxiliary column 210 can utilize its own gravity to allow the seawater 219 to enter the first dynamic chamber 213 through the first opening 214. Alternatively, the seawater 219 may be discharged from the first opening 214 by an external drive device such as a pump or a hydraulic motor, etc. This is only one implementation and is not limited to the above manner.

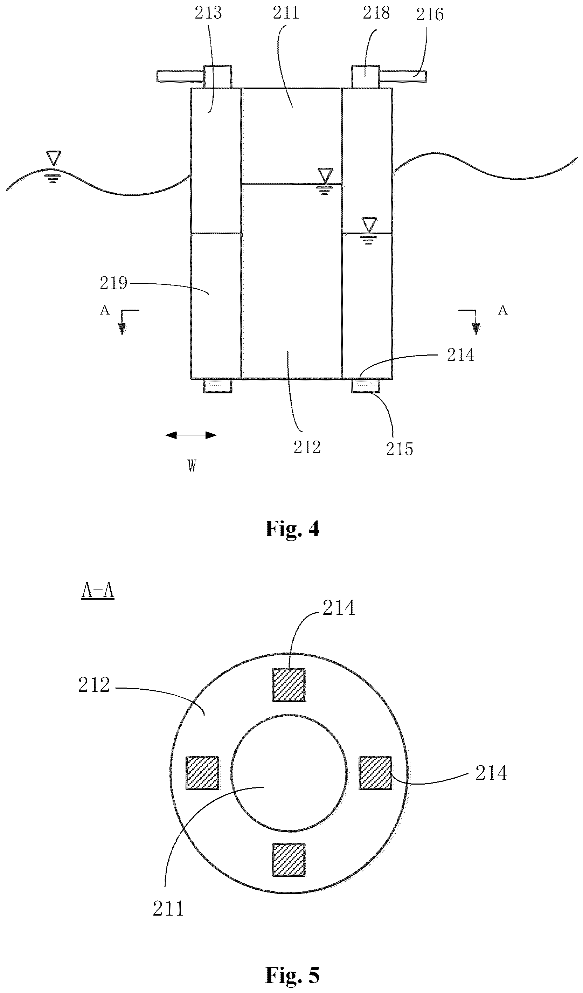

As shown in Figs. 4 to 8, in some optional embodiments, the floating-type wind turbine floating body 200 provided in the embodiments of the present application may further include a compressor 217 and a gas pipe 216 connected to the compressor 217, and the first dynamic chamber 213 of each auxiliary column 210 is connected to the gas pipe 216.

When a corresponding auxiliary column 210 needs to sink, a volume or weight of the seawater 219 in the first dynamic chamber 213 needs to be increased to achieve this. At this time, the first control valve 215 can be opened, so that the first opening 214 is open, allowing the seawater 219 to enter through the first opening 214, and gas in the first dynamic chamber 213 can enter the gas pipe 216 through an opening connecting the first dynamic chamber 213 to the gas pipe 216. Optionally, when the first control valve 215 controls the first opening 214 to be open, a flow rate of the seawater 219 entering the first dynamic chamber 213 can be controlled by varying an opening degree. After the first dynamic chamber 213 is adjusted to a target water level, the water level in the first dynamic chamber 213 can be maintained at a target position, and the first control valve 215 can be closed.

When the corresponding auxiliary column 210 needs to float, the compressor 217 is started, allowing high-pressure gas compressed by the compressor 217 to enter the first dynamic chamber 213 through the gas pipe 216. After an accumulated gas pressure in the first dynamic chamber 213 reaches a predetermined value, the first control valve 215 is opened. Since a pressure in the first dynamic chamber 213 is greater than a pressure outside the auxiliary column 210, under an action of a gas pressure difference, the seawater 219 in the first dynamic chamber 213 will flow out of the first dynamic chamber 213 through the first opening 214 and into the sea. When a volume or weight of remaining seawater 219 in the first dynamic chamber 213 reaches a predetermined requirement, the first control valve 215 is controlled to close the first opening 214.

The floating-type wind turbine floating body 200 provided in the embodiments of the present application is provided with the compressor 217 and the gas pipe 216, so that the floating-type wind turbine floating body 200 itself can reliably discharge the seawater 219 in the first dynamic chamber 213 by utilizing a principle of gas pressure difference, thereby effectively ensuring the response speed when the floating-type wind turbine floating body 200 adjusts its posture.

In addition, the present application constructs a dynamic ballast system based on an open circulation system, and combines the compressor 217 to provide a high-pressure gas source to adjust positions of the auxiliary columns 210 of the floating-type wind turbine floating body 200. Through easy-to-obtain implementation means and methods, a low-cost posture adjustment system is constructed, thereby reducing a weight of the floating body and reducing an electricity cost of the entire wind turbine.

In some optional embodiments, the floating-type wind turbine floating body 200 provided in the embodiments of the present application is provided with a second control valve 218 between each first dynamic chamber 213 and the compressor 217 to adjust a flow rate of gas entering each first dynamic chamber 213. The arrangement of the second control valve 218 facilitates control of other flows entering each first dynamic chamber 213, thereby ensuring the accuracy and stability of posture adjustment of the floating-type wind turbine floating body 200.

In some optional embodiments, the floating-type wind turbine floating body 200 provided in the embodiments of the present application may have the compressor 217 connected to each auxiliary column 210, or alternatively, to the main column 220. Each auxiliary column 210 may be provided with a corresponding compressor 217, and each first dynamic chamber 213 of the same auxiliary column 210 may be connected to the same compressor 217. A flow rate of compressed gas acquired by each first dynamic chamber 213 from the compressor 217 may be controlled by the second control valve 218 provided for the first dynamic chamber 213.

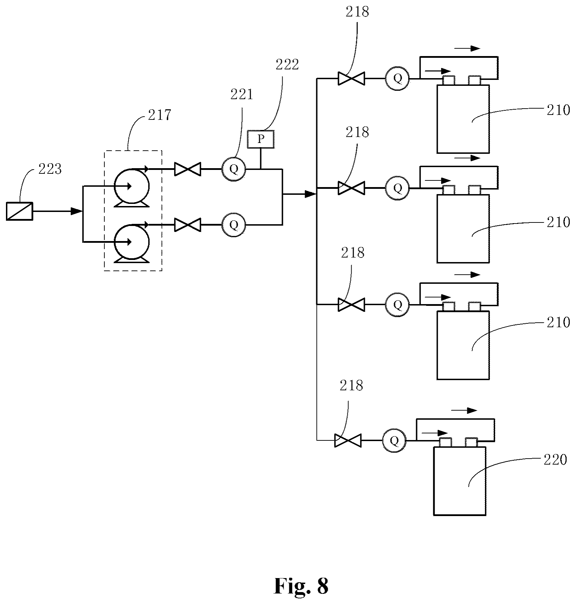

As shown in Fig. 8, this is, of course, an optional implementation. In some embodiments, each auxiliary column 210 may share a single compressor 217, where a compressed gas source for the compressor 217 may be directly acquired from the outside atmosphere. To ensure a quality of an air source of a circulating system, an air filter 223 may be installed at an inlet of the compressor 217. The air entering the system is first pressurized by the compressor 217, then flows through an outlet air valve, and through a flow meter 221 and a pressure gauge 222 for monitoring and feedback. Subsequently, the air is supplied to each branch as needed based on a positional requirement of a posture adjustment device of the floating-type wind turbine floating body 200 for each floating body. A required flow rate of high-pressure gas within the first dynamic chamber 213 of each auxiliary column 210 is distributed and adjusted by controlling the opening, closing, and opening degree of the second control valve 218 corresponding to each auxiliary column 210. The flow rate of the high-pressure gas source in each branch can be monitored and feedback-controlled by using the flow meter 221 arranged in each branch.

In some optional embodiments, in the floating-type wind turbine floating body 200 provided in the embodiments of the present application, each auxiliary column 210 may be a cylindrical structure, and the first opening 214 may be arranged on a bottom wall of each auxiliary column 210 that contacts the seawater 219 in its own axial direction, which is beneficial to the entry and discharge of the seawater 219 and ensures posture adjustment requirements.

Optionally, a number of the first openings 214 included in each auxiliary column 210 may be one, or of course, may be two or more. When there are two or more, the two or more first openings 214 are arranged at intervals and uniformly on a periphery of each auxiliary column 210, and the first control valve 215 may be provided in each first opening 214.

In some optional embodiments, the floating-type wind turbine floating body 200 provided in the embodiments of the present application further includes an inclination angle sensor (not shown), which is arranged on at least one of the main column 220 and the auxiliary columns 210. The inclination angle sensor is configured to acquire an inclination angle, relative to a reference plane, of a whole structure formed by each of the auxiliary columns 210, the first connecting bodies 230, and the main column 220.

The inclination angle sensor may be provided on the auxiliary columns 210, or may be provided on the main column 220.

The reference plane may be a horizontal plane, or a preset plane that is at a certain angle to the horizontal plane.

The floating-type wind turbine floating body 200 provided in the embodiments of the present application, by providing the inclination angle sensor, is capable of detecting the inclination angle, relative to the reference plane, of the whole structure formed by each of the auxiliary columns 210, the first connecting bodies 230, and the main column 220. This is beneficial for determining one or more auxiliary columns 210 that need to be adjusted and the adjustment method based on an inclination angle and a direction of incoming wind, thereby facilitating the posture adjustment of the floating-type wind turbine floating body 200.

Continuing to refer to Figs. 4 to 8, in some optional embodiments, the floating-type wind turbine floating body 200 provided in the embodiments of the present application can make the main column 220 and the auxiliary columns 210 have the same structure. That is to say, the main column 220 may also include a first static chamber 211 and a first dynamic chamber 213, and a first medium 212 is enclosed within the first static chamber 211. Each of the auxiliary columns 210 is provided with a first opening 214 connected to the first dynamic chamber 213 and a first control valve 215, and the first control valve 215 controls opening and closing of the first opening 214 to adjust a volume of the seawater 219 entering the first dynamic chamber 213.

Through the above arrangement, the main column 220 also has a function of adjusting a displacement. The first opening 214 can be directly controlled to be open through the first control valve 215 of the main column 220 to adjust a volume of the seawater 219 in the dynamic chamber of the main column 220. It can cooperate with the auxiliary columns 210 to quickly respond to the influences of wind loads, wave loads, ocean current loads, ice loads, etc. On the basis of ensuring the overall stability of the floating-type wind turbine floating body 200 and the wind turbine generator system where the floating-type wind turbine floating body 200 is located, the overall response speed of the floating-type wind turbine floating body 200 is fast and the stability effect is optimized.

The wind turbine generator system provided in the embodiments of the present application includes the floating-type wind turbine floating body 200 provided in the above embodiments, which can ensure the support requirements for the wind turbine body 100. At the same time, each of the auxiliary columns 210 has a first static chamber 211 and a first dynamic chamber 213 that are independently arranged, a first medium 212 is enclosed within the first static chamber 211, and each of the auxiliary columns 210 is provided with a first opening 214 connected to the first dynamic chamber 213 and a first control valve 215. Under a condition that it is necessary to adjust a displacement of any auxiliary column 210 among the plurality of auxiliary columns 210, the first opening 214 can be directly controlled to be open through the first control valve 215 to adjust a volume of seawater 219 in the first dynamic chamber 213 of the auxiliary column 210. This can quickly change a weight of a single auxiliary column 210 and a displacement of the entire floating-type wind turbine floating body 200, so as to quickly respond to influences of wind loads, wave loads, ocean current loads, ice loads, etc. On the basis of ensuring the overall stability of the floating-type wind turbine floating body 200 and the wind turbine generator system where the floating-type wind turbine floating body 200 is located, this ensures that the overall response speed of the floating-type wind turbine floating body 200 is fast, and a change of the displacement of the floating-type wind turbine floating body 200 can adapt to the influences of different external factors, resulting in a good stability effect.

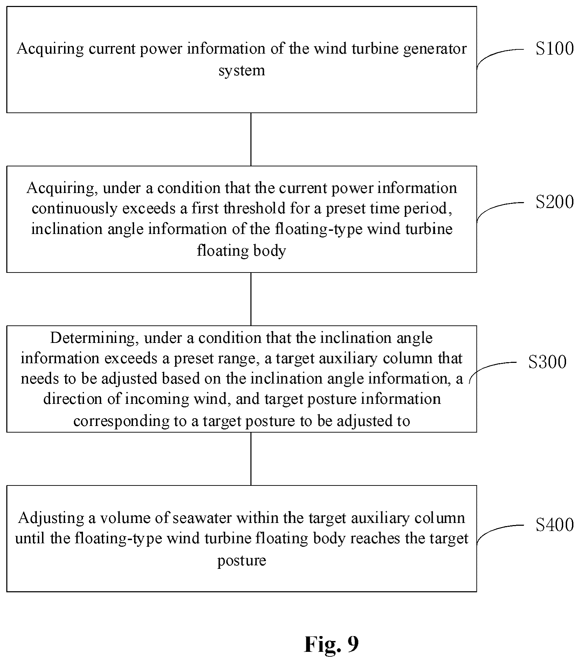

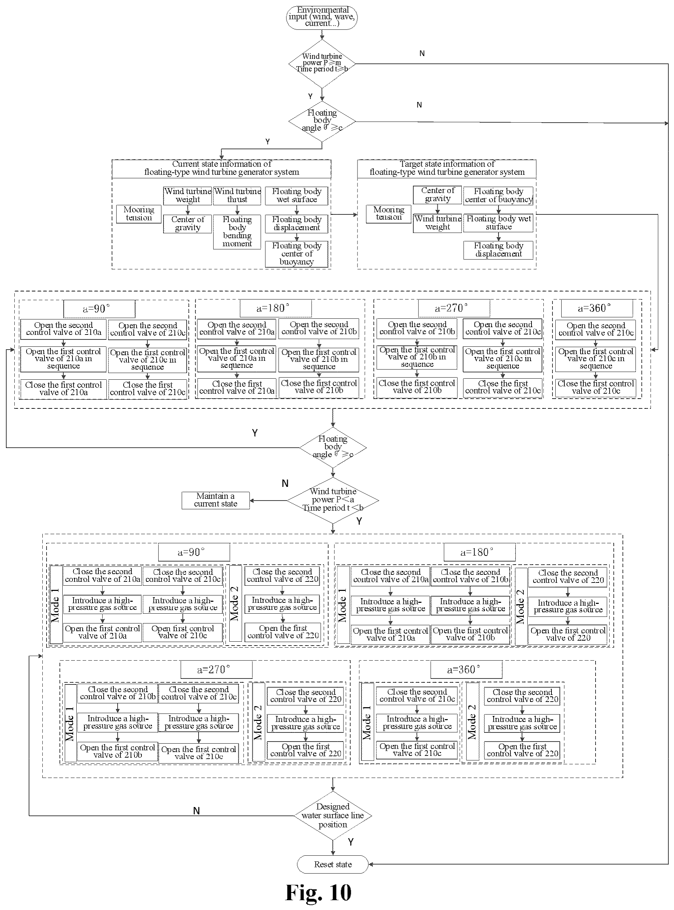

As shown in Fig. 9 and Fig. 10, on the other hand, the embodiments of the present application further provide a control method for a wind turbine generator system, which can be used for the wind turbine generator system provided in the above embodiments. The control method includes:

S 100: acquiring current power information $P$ of the wind turbine generator system.

S200: acquiring, under a condition that the current power information continuously exceeds a first threshold $m$ for a preset time period $t$, inclination angle information of the floating-type wind turbine floating body 200.

S300: determining, under a condition that the inclination angle information exceeds a preset range, a target auxiliary column that needs to be adjusted based on the inclination angle information, a direction of incoming wind, and target posture information corresponding to a target posture to be adjusted to.

S400: adjusting a volume of seawater 219 within the target auxiliary column until the floating-type wind turbine floating body 200 reaches the target posture.

In step S 100, the current power information of the wind turbine generator system may be directly acquired through its master controller, or may be obtained by calculation based on its current rotation speed.

In step S200, the preset time period and the first threshold may be set according to an area where the wind turbine generator system is located and a safety level requirement. For example, a value of the preset time period $t$ may be $t = 20$

min, and the first threshold *m* may be 3000 kw. Of course, the above is only an example given based on a model and safety level requirement, and is not limited to the above form.

In step S300, a posture of an offshore wind turbine generator system is closely related to incoming wind and waves. The incoming wind is taken as an example to describe different states of the impeller of the wind turbine generator system. Combined with a shape of the floating-type wind turbine floating body and a state of the impeller of the wind turbine generator system, a motion posture of the impeller may be defined as four directions. Different directions determine a direction of a thrust and are strongly related to a posture of the floating-type wind turbine floating body 200. Therefore, the target auxiliary column that needs to be adjusted may be determined based on the inclination angle information, the direction of incoming wind, and the target posture information corresponding to the target posture to be adjusted to. A number of the target auxiliary columns may be one, two, three or even more, and the target posture may be a horizontal posture or may be a posture in a predetermined angle with the horizontal posture.

For example, a current state of the floating-type wind turbine generator system may be first acquired through information of the wind turbine generator system, such as mooring tension, gravity, floating body bending moment, and center of buoyancy information. Based on this input, theoretical calculation may be performed to obtain the target posture information, that is, corresponding center of gravity position and center of buoyancy position. Adjustment of the two centers may be achieved through a motion system of a single auxiliary column 210 or multiple auxiliary columns 210, and an input to be implemented needs to be combined with an impeller orientation state.

In step S400, adjusting the volume of the seawater 219 in the target auxiliary column may be done by increasing the volume of the seawater 219 in the target auxiliary column, or by reducing the volume of the seawater 219 in the target auxiliary column, as long as the wind turbine floating body can reach the target posture.

The control method for the wind turbine generator system provided in the embodiments of the present application is set through the above steps, so that the wind turbine generator system maintains an optimal output posture of the wind turbine generator system when dealing with complex and uncertain external loads and its own different operating conditions, thereby ensuring the output of the wind turbine generator system.

With respect to the control method for the wind turbine generator system provided in the embodiments of the present application, the wind turbine body 100 is connected to its main column 220. Through the above steps, a posture of the floating-type wind turbine floating body 200 can be adjusted by adjusting a volume of the seawater 219 in the first dynamic chamber 213 of a corresponding auxiliary column 210, so that the wind turbine generator system maintains the optimal output posture of the wind turbine generator system when dealing with complex and uncertain external loads and its own different operating conditions, thereby ensuring the output of the wind turbine generator system.

In some optional embodiments, with respect to the control method provided in the embodiments of the present application, the inclination angle information includes an inclination angle $\theta$ of the floating-type wind turbine floating body 200 relative to a preset reference plane.

The step of determining, under a condition that the inclination angle information exceeds a preset range, a target auxiliary column that needs to be adjusted based on the inclination angle information, a direction of incoming wind, and target posture information corresponding to a target posture to be adjusted to includes:

determining, under a condition that the inclination angle of the floating-type wind turbine floating body 200 relative to the preset reference plane is greater than a second threshold *c*, and an included angle *a* between the direction of incoming wind and a reference wind direction is in a range of 0°<a<360°, at least two auxiliary columns 210 of the plurality of auxiliary columns 210 as the target auxiliary columns to be adjusted;

determining, under a condition that the inclination angle of the floating-type wind turbine floating body 200 relative to the preset reference plane is greater than the second threshold c, and the included angle *a* between the direction of incoming wind and the reference wind direction is 360°, an auxiliary column 210 among the plurality of auxiliary columns 210 as the target auxiliary column, wherein an extension direction of a line connecting a center of the auxiliary column 210 to a center of the main column 220 is parallel to the direction of incoming wind.

The control method provided in the embodiments of the present application, through the above arrangement, can determine the target auxiliary column according to a value of the included angle *a* between the direction of incoming wind and the reference wind direction, which is beneficial to the determination of the target auxiliary column and ensures that the floating-type wind turbine floating body 200 is adjusted according to the incoming wind and the target posture.

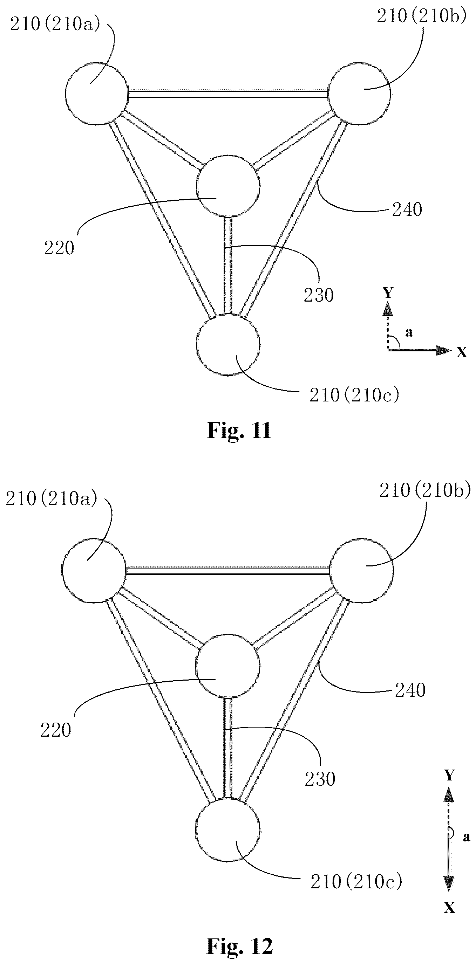

As shown in Figs. 11 to 14, in some optional embodiments, with respect to the control method provided in the embodiments of the present application, the floating-type wind turbine floating body 200 includes three auxiliary columns 210, namely a first auxiliary column 210a, a second auxiliary column 210b, and a third auxiliary column 210c, an included angle between a line connecting a center of the first auxiliary column 210a and the center of the main column 220 and the reference wind direction Y is 60°, an included angle between a line connecting a center of the second auxiliary column 210b and the center of the main column 220 and the reference wind direction Y is 300°, and an included angle between a line connecting a center of the third auxiliary column 210c and the center of the main column 220 and the reference wind direction Y is 180°.

The step of determining, under a condition that the inclination angle of the floating-type wind turbine floating body 200 relative to the preset reference plane is greater than a second threshold *c*, and an included angle *a* between the direction X of incoming wind and a reference wind direction Y is in a range of 0°<*a*<360°, at least two auxiliary columns 210 of the plurality of auxiliary columns 210 as the target auxiliary columns to be adjusted includes:

determining, under a condition that the inclination angle of the floating-type wind turbine floating body 200 relative to the preset reference plane is greater than the second threshold c, and the included angle *a* between the direction X of incoming wind and the reference wind direction Y is in a range of 0°<*a*≤90°, the first auxiliary column 210a and the third auxiliary column 210c as the target auxiliary columns to be adjusted;

determining, under a condition that the inclination angle of the floating-type wind turbine floating body 200 relative to the preset reference plane is greater than the second threshold c, and the included angle *a* between the direction X of incoming wind and the reference wind direction Y is in a range of 90°<*a*≤180°, the first auxiliary column 210a and the second auxiliary column 210b as the target auxiliary columns to be adjusted;

determining, under a condition that the inclination angle of the floating-type wind turbine floating body 200 relative to the preset reference plane is greater than the second threshold *c*, and the included angle *a* between the direction X of incoming wind and the reference wind direction Y is in a range of 180°<*a*<360°, the second auxiliary column 210b and the third auxiliary column 210c as the target auxiliary columns to be adjusted.

For example, taking three auxiliary columns 210 as an example, the reference wind direction Y is the vertically upward direction in the figures.

As shown in Fig. 11, under a condition that the included angle *a* between the direction X of incoming wind and the reference wind direction Y is 90°, it is necessary to adjust motion of the first auxiliary column 210a and the third auxiliary column 210c. The second control valve 218 connected to the gas pipe 216 at the top of the first auxiliary column 210a and the second control valve 218 connected to the gas pipe 216 at the top of the third auxiliary column 210c are opened. Then, the first control valve 215 of the first auxiliary column 210a and the first control valve 215 of the third auxiliary column 210c are opened in sequence to allow the seawater 219 to enter the first auxiliary column 210a and the third auxiliary column 210c, until the floating-type wind turbine floating body 200 as a whole reaches the target posture, such as a leveling posture, or the inclination angle information of the floating-type wind turbine floating body 200 is adjusted to the preset range. Then, the first control valve 215 corresponding to each auxiliary column 210 may be closed.

As shown in Fig. 12, under a condition that the included angle *a* between the direction X of incoming wind and the reference wind direction Y is 180°, it is necessary to adjust motion of the first auxiliary column 210a and the second auxiliary column 210b. The second control valve 218 connected to the gas pipe 216 at the top of the first auxiliary column 210a and the second control valve 218 connected to the gas pipe 216 at the top of the second auxiliary column 210b are opened. Then, the first control valve 215 of the first auxiliary column 210a and the first control valve 215 of the second auxiliary column 210b are opened in sequence to allow the seawater 219 to enter the first auxiliary column 210a and the second auxiliary column 210b, until the floating-type wind turbine floating body 200 as a whole reaches the target posture, such as a leveling posture, or the inclination angle information of the floating-type wind turbine floating body 200 is adjusted to the preset range. Then, the first control valve 215 corresponding to each auxiliary column 210 may be closed.

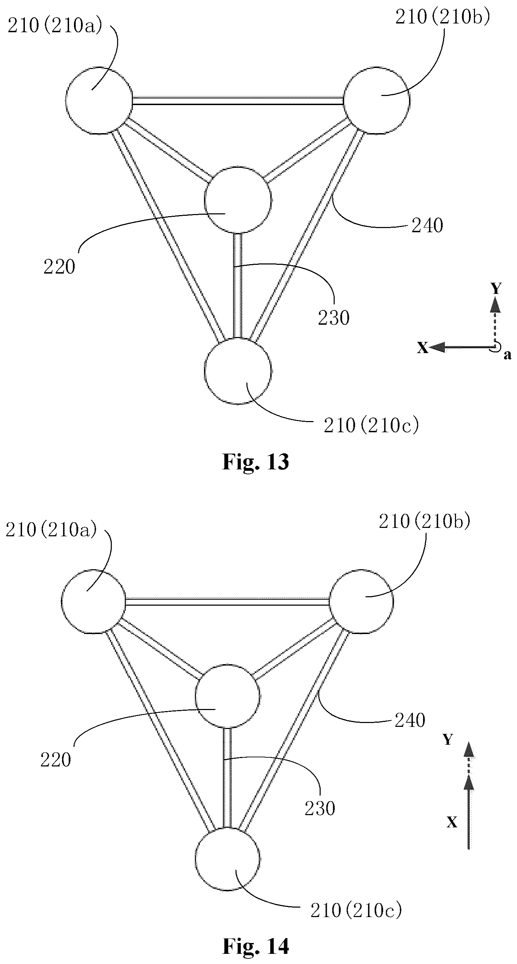

As shown in Fig. 13, under a condition that the included angle *a* between the direction X of incoming wind and the reference wind direction Y is 270°, it is necessary to adjust motion of the second auxiliary column 210b and the third auxiliary column 210c. The second control valve 218 connected to the gas pipe 216 at the top of the second auxiliary column 210b and the second control valve 218 connected to the gas pipe 216 at the top of the third auxiliary column 210c are opened. Then, the first control valve 215 of the second auxiliary column 210b and the first control valve 215 of the third auxiliary column 210c are opened in sequence to allow the seawater 219 to enter the second auxiliary column 210b and the third auxiliary column 210c, until the floating-type wind turbine floating body 200 as a whole reaches the target posture, such as a leveling posture, or the inclination angle information of the floating-type wind turbine floating body 200 is adjusted to the preset range. Then, the first control valve 215 corresponding to each auxiliary column 210 may be closed.

As shown in Fig. 14, under a condition that the included angle *a* between the direction X of incoming wind and the reference wind direction Y is 360°, it is necessary to adjust motion of the third auxiliary column 210c. The second control valve 218 connected to the gas pipe 216 at the top of the third auxiliary column 210c is opened. Then, the first control valve 215 of the third auxiliary column 210c is opened to allow the seawater 219 to enter the third auxiliary column 210c, until the floating-type wind turbine floating body 200 as a whole reaches the target posture, such as a leveling posture, or the inclination angle information of the floating-type wind turbine floating body 200 is adjusted to the preset range. Then, the first control valve 215 corresponding to each auxiliary column 210 may be closed.

The above four postures are all examples and are not limited to the above methods. They are intended to resist incoming wind and reduce a probability of surge, sway, heave, roll, pitch, and yaw.

The control method provided in the embodiments of the present application, through the above arrangement, enables the number of the auxiliary columns 210 to be three and enables the auxiliary columns 210 to be arranged at intervals in the circumferential direction Z of the main column 220. A target floating body can be accurately determined based on a value of the angle *a* between the direction X of incoming wind and the reference wind direction Y. By adjusting a volume of the target floating body, the floating-type wind turbine floating body 200 can always be close to a horizontal posture or a target posture, thereby enabling the wind turbine generator system to capture wind energy at an optimal wind-facing angle as much as possible under different operating conditions.

It can be understood that the above embodiments of the present application use *a* = 90°, *a* = 180°, *a* = 270° and *a* = 360° as specific examples. When *a* is between any two of the above nodes, posture adjustment can also be achieved by combining corresponding column operation responses in the two states.

In some optional embodiments, with respect to the control method provided in the embodiments of the present application, the adjusting the volume of seawater 219 within the target auxiliary column includes: pressing the seawater 219 into the target auxiliary column through the first opening 214 and discharging the seawater 219 into a sea area to adjust an overall displacement of the floating-type wind turbine floating body.

Through the above arrangement, the overall displacement of the floating-type wind turbine floating body 200 can be changed to adapt to the incoming wind, which is beneficial to the adjustment of the posture of the wind turbine floating body.

In some optional embodiments, according to another aspect of the embodiments of the present application, after the step of adjusting a volume of seawater 219 within the target auxiliary column until the floating-type wind turbine floating body 200 reaches the target posture, the control method further includes: acquiring current power information of the wind turbine generator system; adjusting, under a condition that the current power information is continuously less than the first threshold for a preset time period, the volume of seawater 219 within the target auxiliary column to restore to an initial state.

The initial state may be understood as a previous state before the inclination angle information exceeds the preset range, that is, a state when the volume of the seawater 219 is not added or reduced in the first dynamic chamber 213 of the auxiliary column 210.

For example, under a condition that the included angle *a* between the direction X of incoming wind and the reference wind direction Y is 90°, when restoring the initial state, the second control valves 218 at the top of the first auxiliary column 210a and the third auxiliary column 210c need to be closed first. Then, a high-pressure gas source can be introduced into the first dynamic chambers 213 of the first auxiliary column 210a and the third auxiliary column 210c. Under a condition that a pressure value approaches an input high-pressure gas source pressure, the first control valves 215 of the first auxiliary column 210a and the third auxiliary column 210c are opened in sequence until the first auxiliary column 210a and the third auxiliary column 210c return to a designed water surface line position, thereby allowing the wind turbine generator system to enter a reset state. For structural forms shown in Figs. 12 to 14, adjustment methods are similar to the above adjustment method. That is, under a condition that the current power information is continuously less than the first threshold for the preset time period, the seawater 219 previously added to the target floating body is discharged to restore it to the initial state, so that the wind turbine generator system always maintains a relatively optimal power generation state.

Through the above arrangement, after the incoming wind changes direction or an intensity of the incoming wind decreases, the floating-type wind turbine floating body 200 will not tilt due to the increased seawater 219, thereby ensuring a power generation efficiency of the wind turbine generator system.

It can be understood that the above methods of restoring the initial state are only some optional embodiments and are not limited to the above methods. In some embodiments, under a condition that a structure of the main column 220 and a structure of each of the auxiliary columns 210 are the same, the control method further includes: acquiring current power information of the wind turbine generator system; adjusting, under a condition that the current power information is continuously less than the first threshold for a preset time period, the volume of seawater 219 within the target auxiliary column and a volume of seawater 219 in the main column 220 to restore the floating-type wind turbine floating body 200 to an initial state. In other words, the main column 220 and the auxiliary columns 210 can cooperate to achieve reset.

For example, under a condition that the included angle *a* between the direction X of incoming wind and the reference wind direction Y is 90°, when restoring the initial state, it is necessary to close the second control valves 218 at the top of the first auxiliary column 210a, the third auxiliary column 210c, and the main column 220. Then, a high-pressure gas source can be introduced into the first dynamic chambers 213 of the first auxiliary column 210a, the third auxiliary column 210c, and the main column 220. Under a condition that a pressure value approaches an input high-pressure gas source pressure, the first control valves 215 of the first auxiliary column 210a, the third auxiliary column 210c, and the main column 220 are opened in sequence until the first auxiliary column 210a, the third auxiliary column 210c, and the main column 220 return to a designed water surface line position, thereby allowing the wind turbine generator system to enter a reset state. For structural forms shown in Figs. 12 to 14, adjustment methods are similar to the above adjustment method. That is, under a condition that the current power information is continuously less than the first threshold for the preset time period, the seawater 219 previously added to the target floating body is discharged to restore it to the initial state, so that the wind turbine generator system always maintains a relatively optimal power generation state. For details, please refer to a combination of mode 1 and mode 2 corresponding to incoming wind in different directions in Fig. 10.

It can be understood that the above embodiments of the present application are all illustrated by taking the number of the auxiliary columns 210 as three. This is only for the purpose of better understanding the examples given in the present application. In some embodiments, the number of the auxiliary columns 210 may be four or five, and lines connecting centers of the auxiliary columns 210 form a quadrilateral or a pentagon. The target floating body can also be determined according to the direction of incoming wind, a current posture information and the target posture information corresponding to a target posture to be adjusted to. Taking four as an example, according to different incoming wind directions, at least two of the auxiliary columns 210 may be determined as target floating bodies to resist tipping of the wind turbine generator system in the direction of incoming wind, so as to reduce a probability of occurrence of phenomena such as surge, sway, heave, roll, pitch, and yaw, so that the wind turbine floating body can reach the target posture, such as the leveling posture, or the inclination angle information of the wind turbine floating body is adjusted to the preset range. The present application will not list them one by one.

In some optional embodiments, the wind turbine generator system provided in the embodiments of the present application may further include a controller, which is configured to: acquire current power information of the wind turbine generator system; acquire, under a condition that the current power information continuously exceeds a first threshold for a preset time period, inclination angle information of the floating-type wind turbine floating body 200; determine, under a condition that the inclination angle information exceeds a preset range, a target auxiliary column that needs to be adjusted based on the inclination angle information, a direction of incoming wind, and target posture information corresponding to a target posture to be adjusted to; and adjust a volume of seawater 219 within the target auxiliary column until the floating-type wind turbine floating body 200 reaches the target posture.

Optionally, the controller may be configured to execute the steps corresponding to the control methods provided in the above embodiments, which will not be described in detail here.

The controller of the wind turbine generator system provided in the embodiments of the present application may be a separately arranged control cabinet, or may be integrated into a master controller of the wind turbine generator system.

The wind turbine generator system provided in the embodiments of the present application can be used to execute the control methods provided in the above embodiments by arranging the controller, which is beneficial to the control of the floating-type wind turbine floating body 200, so that it can adjust a volume of seawater 219 in the dynamic chamber of a corresponding float body according to a direction of incoming wind, a current posture and a target posture, thereby ensuring the overall power generation efficiency of the wind turbine generator system.

Although the present application has been described with reference to preferred embodiments, various modifications may be made thereto and components may be substituted with equivalents without departing from the scope of the present application. In particular, various technical features described in various embodiments may be combined in any manner as long as there are no structural conflicts. The present application is not limited to the specific embodiments disclosed herein, but encompasses all technical solutions falling within the scope of the claims.

**Claims**

1. A floating-type wind turbine floating body, capable of being arranged in seawater and configured to support a tower, wherein the floating-type wind turbine floating body comprises:

   a main column, configured to support the tower;
   a plurality of first connecting bodies, wherein the plurality of first connecting bodies are arranged at intervals in a circumferential direction of the main column and are connected to the main column respectively;
   a plurality of auxiliary columns, wherein the plurality of auxiliary columns are distributed at intervals in the circumferential direction, and one end of each of the first connecting bodies facing away from the main column is connected to a corresponding auxiliary column of the auxiliary columns;
   wherein each of the auxiliary columns has a first static chamber and a first dynamic chamber that are independently arranged, a first medium is enclosed within the first static chamber, each of the auxiliary columns is provided with a first opening connected to the first dynamic chamber and a first control valve, and the first control valve controls opening and closing of the first opening to adjust a volume of the seawater entering the first dynamic chamber.

2. The floating-type wind turbine floating body according to claim 1, wherein the plurality of auxiliary columns are arranged at intervals and uniformly in the circumferential direction, and a second connecting body is connected between every two adjacent auxiliary columns.

3. The floating-type wind turbine floating body according to claim 1 or 2, wherein one of the first static chamber and the first dynamic chamber is arranged around the other.

4. The floating-type wind turbine floating body according to claim 3, wherein one of the first dynamic chamber and the first static chamber is an annular chamber and the other is a columnar chamber, and the first dynamic chamber and the first static chamber are arranged coaxially with each other.

5. The floating-type wind turbine floating body according to any one of claims 1 to 4, wherein each of the auxiliary columns is in a shape of a hollow column as a whole, and the first dynamic chamber and the first static chamber are arranged alternately in a radial direction of each of the auxiliary columns.

6. The floating-type wind turbine floating body according to claim 5, wherein each of the auxiliary columns has two or more first dynamic chambers, and the two or more first dynamic chambers are all arranged around the first static chamber and are independently distributed from each other.

7. The floating-type wind turbine floating body according to any one of claims 1 to 6, wherein the first medium comprises at least one of a solid medium and a liquid medium.

8. The floating-type wind turbine floating body according to any one of claims 1 to 7, further comprising: a compressor and a gas pipe connected to the compressor, wherein the first dynamic chamber of each of the auxiliary columns is connected to the gas pipe.

9. The floating-type wind turbine floating body according to claim 8, wherein a second control valve is arranged between the first dynamic chamber and the compressor to adjust a flow rate of gas entering the first dynamic chamber.

10. The floating-type wind turbine floating body according to any one of claims 1 to 9, further comprising: an inclination angle sensor, arranged on at least one of the main column and the auxiliary columns, and configured to acquire an inclination angle, relative to a reference plane, of a whole structure formed by each of the auxiliary columns, the first connecting bodies, and the main column.

11. The floating-type wind turbine floating body according to any one of claims 1 to 10, wherein a structure of the main column and a structure of each of the auxiliary columns are the same.

12. A wind turbine generator system, comprising:

   the floating-type wind turbine floating body according to any one of claims 1 to 11;
   a wind turbine main body arranged on the main column, wherein the wind turbine main body comprises the tower connected to the main column, a nacelle arranged on the tower, and an impeller arranged on the nacelle.

13. The wind turbine generator system according to claim 12, further comprising a controller, configured to:

   acquire current power information of the wind turbine generator system;
   acquire, under a condition that the current power information continuously exceeds a first threshold for a preset time period, inclination angle information of the floating-type wind turbine floating body;
   determine, under a condition that the inclination angle information exceeds a preset range, a target auxiliary column that needs to be adjusted based on the inclination angle information, a direction of incoming wind, and target posture information corresponding to a target posture to be adjusted to; and
   adjust a volume of seawater within the target auxiliary column until the floating-type wind turbine floating body reaches the target posture.

14. A control method for the wind turbine generator system according to claim 12, comprising:

   acquiring current power information of the wind turbine generator system;
   acquiring, under a condition that the current power information continuously exceeds a first threshold for a preset time period, inclination angle information of the floating-type wind turbine floating body;
   determining, under a condition that the inclination angle information exceeds a preset range, a target auxiliary column that needs to be adjusted based on the inclination angle information, a direction of incoming wind, and target posture information corresponding to a target posture to be adjusted to; and
   adjusting a volume of seawater within the target auxiliary column until the floating-type wind turbine floating body reaches the target posture.

15. The control method according to claim 14, wherein the inclination angle information comprises an inclination angle of the floating-type wind turbine floating body relative to a preset reference plane;

the step of determining, under a condition that the inclination angle information exceeds a preset range, a target auxiliary column that needs to be adjusted based on the inclination angle information, a direction of incoming wind, and target posture information corresponding to a target posture to be adjusted to comprises:

determining, under a condition that the inclination angle of the floating-type wind turbine floating body relative to the preset reference plane is greater than a second threshold, and an included angle a between the direction of incoming wind and a reference wind direction is in a range of 0°<a<360°, at least two of the plurality of auxiliary columns as the target auxiliary columns to be adjusted; and

determining, under a condition that the inclination angle of the floating-type wind turbine floating body relative to the preset reference plane is greater than the second threshold, and the included angle a between the direction of incoming wind and the reference wind direction is 360°, an auxiliary column among the plurality of auxiliary columns as the target auxiliary column, wherein an extension direction of a line connecting a center of the auxiliary column to a center of the main column is parallel to the direction of incoming wind.

16. The control method according to claim 15, wherein the floating-type wind turbine floating body comprises three auxiliary columns comprising a first auxiliary column, a second auxiliary column, and a third auxiliary column, an included angle between a line connecting a center of the first auxiliary column and the center of the main column and the reference wind direction is 60°, an included angle between a line connecting a center of the second auxiliary column and the center of the main column and the reference wind direction is 300°, and an included angle between a line connecting a center of the third auxiliary column and the center of the main column and the reference wind direction is 180°;

the step of determining, under a condition that the inclination angle of the floating-type wind turbine floating body relative to the preset reference plane is greater than a second threshold, and an included angle a between the direction of incoming wind and a reference wind direction is in a range of 0°<a<360°, at least two of the plurality of auxiliary columns as the target auxiliary columns to be adjusted comprises:

determining, under a condition that the inclination angle of the floating-type wind turbine floating body relative to the preset reference plane is greater than the second threshold, and the included angle a between the direction of incoming wind and the reference wind direction is in a range of 0°<a≤90°, the first auxiliary column and the third auxiliary column as the target auxiliary columns to be adjusted;

determining, under a condition that the inclination angle of the floating-type wind turbine floating body relative to the preset reference plane is greater than the second threshold, and the included angle a between the direction of incoming wind and the reference wind direction is in a range of 90°<a≤180°, the first auxiliary column and the second auxiliary column as the target auxiliary columns to be adjusted; and

determining, under a condition that the inclination angle of the floating-type wind turbine floating body relative to the preset reference plane is greater than the second threshold, and the included angle a between the direction of incoming wind and the reference wind direction is in a range of 180°<a<360°, the second auxiliary column and the third auxiliary column as the target auxiliary columns to be adjusted.

17. The control method according to claim 14, wherein the adjusting the volume of seawater within the target auxiliary column comprises:
pressing the seawater into the target auxiliary column through the first opening and discharging the seawater into a sea area to adjust an overall displacement of the floating-type wind turbine floating body.

18. The control method according to claim 14, wherein after the step of adjusting a volume of seawater within the target auxiliary column until the floating-type wind turbine floating body reaches the target posture, the control method further comprises:

acquiring current power information of the wind turbine generator system;
adjusting, under a condition that the current power information is continuously less than the first threshold for a preset time period, the volume of seawater within the target auxiliary column to restore to an initial state; or
a structure of the main column and a structure of each of the auxiliary columns are the same, and the method further comprises:

acquiring current power information of the wind turbine generator system;

adjusting, under a condition that the current power information is continuously less than the first threshold for a preset time period, the volume of seawater within the target auxiliary column and a volume of seawater in the main column to restore the floating-type wind turbine floating body to an initial state.

**Fig. 1**

**Fig. 2**

**Fig. 3**

**Fig. 4**

A–A

**Fig. 5**

**Fig. 6**

**Fig. 7**

**Fig. 8**

Acquiring current power information of the wind turbine generator system ⎯ S100

Acquiring, under a condition that the current power information continuously exceeds a first threshold for a preset time period, inclination angle information of the floating-type wind turbine floating body ⎯ S200

Determining, under a condition that the inclination angle information exceeds a preset range, a target auxiliary column that needs to be adjusted based on the inclination angle information, a direction of incoming wind, and target posture information corresponding to a target posture to be adjusted to ⎯ S300

Adjusting a volume of seawater within the target auxiliary column until the floating-type wind turbine floating body reaches the target posture ⎯ S400

**Fig. 9**

**Fig. 10**

Fig. 11

Fig. 12

210 (210a)

210 (210b)

220

240

Y

X ——— a

230

210 (210c)

**Fig. 13**

210 (210a)

210 (210b)

220

240

Y

230

X

210 (210c)

**Fig. 14**

## INTERNATIONAL SEARCH REPORT

| International application No. |
|---|
| **PCT/CN2023/140355** |

**A.  CLASSIFICATION OF SUBJECT MATTER**

F03D13/25(2016.01)i;  F03D13/20(2016.01)i;  F03D80/00(2016.01)i

According to International Patent Classification (IPC) or to both national classification and IPC

**B.  FIELDS SEARCHED**

Minimum documentation searched (classification system followed by classification symbols)

IPC:  F03D

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 漂浮式, 风机浮体, 塔架, 主立柱, 连接体, 辅助立柱, 静态, 动态, 腔室, 开口, 阀, 海水, 体积, floating, fan, base, tower, main, column, connector, auxiliary, static, dynamic, chamber, opening, vlave, seawater, volume

**C.  DOCUMENTS CONSIDERED TO BE RELEVANT**

| Category* | Citation of document, with indication, where appropriate, of the relevant passages | Relevant to claim No. |
|---|---|---|
| PX | CN 117028155 A (GOLDWIND SCIENCE & TECHNOLOGY CO., LTD. et al.) 10 November 2023 (2023-11-10)<br>see claims 1-18 | 1-18 |
| Y | CN 114313125 A (SICHUAN HONGHUA PETROLEUM EQUIPMENT CO., LTD.) 12 April 2022 (2022-04-12)<br>see description, paragraphs [0090]-[0109], and figures 1-15 | 1-14, 17-18 |
| Y | US 2021009236 A1 (NAVAL ENERGIES) 14 January 2021 (2021-01-14)<br>see description, paragraphs [0044]-[0116], and figures 1-2 | 1-14, 17-18 |
| A | CN 115355140 A (ZHEJIANG JINFENG SCIENCE & TECHNOLOGY CO., LTD.) 18 November 2022 (2022-11-18)<br>see entire document | 1-18 |
| A | CN 115949554 A (XINJIANG GOLDWIND SCIENCE & TECHNOLOGY CO., LTD.) 11 April 2023 (2023-04-11)<br>see entire document | 1-18 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 March 2024** | **22 March 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/140355** |

### C.    DOCUMENTS CONSIDERED TO BE RELEVANT

| Category* | Citation of document, with indication, where appropriate, of the relevant passages | Relevant to claim No. |
|---|---|---|
| A | CN 116002002 A (DALIAN UNIVERSITY OF TECHNOLOGY) 25 April 2023 (2023-04-25) see entire document | 1-18 |
| A | CN 208416796 U (MINGYANG SMART ENERGY GROUP CO., LTD.) 22 January 2019 (2019-01-22) see entire document | 1-18 |
| A | CN 115539311 A (JIANGSU GOLDWIND SCIENCE & TECHNOLOGY CO., LTD.) 30 December 2022 (2022-12-30) see entire document | 1-18 |
| A | CN 107269472 A (FOSHAN UNIVERSITY) 20 October 2017 (2017-10-20) see entire document | 1-18 |
| A | US 2018105235 A1 (ATKINS ENERGY INC.) 19 April 2018 (2018-04-19) see entire document | 1-18 |

Form PCT/ISA/210 (second sheet) (July 2022)

## INTERNATIONAL SEARCH REPORT
### Information on patent family members

International application No.

**PCT/CN2023/140355**

| Patent document cited in search report | | | Publication date (day/month/year) | Patent family member(s) | | | Publication date (day/month/year) |
|---|---|---|---|---|---|---|---|
| CN | 117028155 | A | 10 November 2023 | None | | | |
| CN | 114313125 | A | 12 April 2022 | CN | 114313125 | B | 13 June 2023 |
| US | 2021009236 | A1 | 14 January 2021 | FR | 3079204 | A1 | 27 September 2019 |
| | | | | FR | 3079204 | B1 | 05 June 2020 |
| | | | | JP | 2021518305 | A | 02 August 2021 |
| | | | | JP | 7345490 | B2 | 15 September 2023 |
| | | | | KR | 20200133784 | A | 30 November 2020 |
| | | | | EP | 3768586 | A1 | 27 January 2021 |
| | | | | US | 11492078 | B2 | 08 November 2022 |
| | | | | WO | 2019179881 | A1 | 26 September 2019 |
| CN | 115355140 | A | 18 November 2022 | CN | 115355140 | B | 04 August 2023 |
| CN | 115949554 | A | 11 April 2023 | CN | 115949554 | B | 22 September 2023 |
| CN | 116002002 | A | 25 April 2023 | None | | | |
| CN | 208416796 | U | 22 January 2019 | None | | | |
| CN | 115539311 | A | 30 December 2022 | None | | | |
| CN | 107269472 | A | 20 October 2017 | WO | 2019010947 | A1 | 17 January 2019 |
| | | | | CN | 206942935 | U | 30 January 2018 |
| US | 2018105235 | A1 | 19 April 2018 | WO | 2018075558 | A1 | 26 April 2018 |
| | | | | US | 11173987 | B2 | 16 November 2021 |
| | | | | US | 2022212762 | A1 | 07 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310816298